# EUROPEAN PATENT APPLICATION

(11) **EP 2 439 919 A1**
(43) Date of publication of application: **11.04.2012**
(21) Application number: 09848204.5
(22) Date of filing: 14.12.2009
(51) Int. Cl.: H04M 3/51

(54) **SEAT MODULE, CUSTOMER SERVICE SYSTEM AND CUSTOMER SERVICE IMPLEMENTATION METHOD**

(30) Priority: 11.08.2009 CN 200910090873
(71) Applicant: ZTE Corporation, Shenzhen, Guangdong 518057 (CN)
(72) Inventor: WANG, Dong, Shenzhen Guangdong 518057 (CN)
(74) Representative: Howson, Richard G.B.
(86) International application number: PCT/CN2009/075542
(87) International publication number: WO 2011/017874

(57) **Abstract**

The disclosure provides an agent module, a customer service system and a method for implementing customer service. The set module comprises: a collection submodule, for collecting video data; a selection submodule, for selecting a picture to be transmitted from pre-saved pictures; a modification submodule, for using the picture to be transmitted to modify the collected video data to be transmitted to obtain modified video data of which video frames at least include the picture to be transmitted; a coding submodule, for performing compression coding to the modified video data to obtain a coded stream; and a transmission submodule, for transmitting the coded stream to a user terminal through a video channel. By adopting the disclosure the response rate to transmit a picture is improved, at the same time the interaction between the modules in the customer service system is reduced, the implementation complexity is reduced, and the network resources and the time are also saved.

## Description

### TECHNICAL FIELD

The disclosure relates to the technical field of customer service, in particular to an agent module, a customer service system and a method for implementing customer service.

### BACKGROUND

A call center is also called a customer service system, which is an information system for providing various kinds of access ways to users, such as a telephone, a fax, an e-mail and the like. The call center, such as 1860 in a telecommunications industry and 95555 in a financial industry, is mainly used for processing requirements, questions, complaints, suggestions and consultations proposed by users to enterprises.

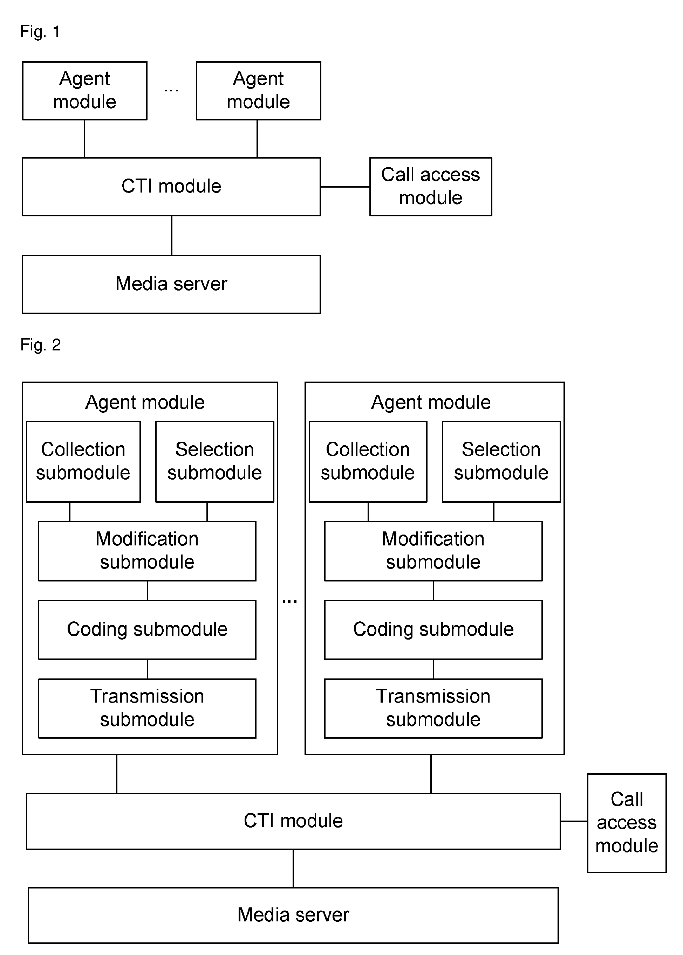

As shown in Fig. 1, a customer service system comprises: a call access module, a Computer-Telephony Integration (CTI) module, at least one agent module and a media server; wherein the media server can provide automatic customer service for a user; when manual service is needed, the CTI module can route a user call to one agent module according to a certain strategy; the agent module may provide a platform for a telephone operator to interact with the user.

As communication technologies have been improved gradually, people can obtain not only customer service in the form of voice, but also customer service in the form of video, during the customer service.

When the user applies for manual video service during the automatic service, the CTI module may select one agent module according to a certain strategy, establish a video channel between the agent module and a customer terminal, and release a video channel between the media server and the customer terminal.

During providing the manual video service for the user by the agent module through the established video channel, if the agent module needs to transmit a picture to the user, a transmission channel between the media server and the customer terminal needs to be reestablished by the CTI module, and the picture is pushed to the customer terminal by the media server through the transmission channel; therefore, the above-mentioned prior art at least has the following defects:
slow response: as the transmission channel between the media server and the customer terminal needs to be reestablished, the response is slow; and
as the push of the picture is implemented by the media server, signaling is various and the implementation is complex.

### SUMMARY

The purpose of the disclosure is to provide an agent module, a customer service system and a method for implementing customer service, so that a picture can be pushed to a user terminal fast and simply when manual video service is provided to the user.

In order to implement the above purpose, an embodiment of the disclosure provides an agent module, which is used in a customer service system and used for providing manual video service for a user through a video channel between the agent module and a user terminal, wherein the agent module comprises:
a collection submodule, for collecting video data;
a selection submodule, for selecting a picture to be transmitted from pre-saved pictures;
a modification submodule, for using the picture to be transmitted to modify the collected video data to be transmitted to obtain modified video data of which video frames at least include the picture to be transmitted;
a coding submodule, for performing compression coding to the modified video data to obtain a coded stream; and
a transmission submodule, for transmitting the coded stream to the user terminal through the video channel.

In the agent module, the modification submodule may specifically be used for replacing an image of a video frame of the video data to be transmitted with the picture to be transmitted to obtain the modified video data.

In the agent module, the modification submodule may specifically be used for performing transparency fusion by using either an image of a video frame of the video data to be transmitted or the picture to be transmitted as background and using the other one as foreground to obtain the modified video data.

In the agent module, the modification submodule may specifically be used for using either an image of a video frame of the video data to be transmitted or the picture to be transmitted as background and overlaying the other one into a predefined position of the background in a way of window to obtain the modified video data.

In order to implement the above purpose, an embodiment of the disclosure also provides a customer service system, and it comprises:
a call access module;
at least one agent module;
a Computer-Telephony Integration (CTI) module, for establishing a video channel between the agent module and a user terminal when a user applies for manual video service;
wherein the agent module comprises:
   a collection submodule, for collecting video data;
   a selection submodule, for selecting a picture to be transmitted from pre-saved pictures;
   a modification submodule, for using the picture to be transmitted to modify the collected video data to be transmitted to obtain modified video data of which video frames at least include the picture to be transmitted;
   a coding submodule, for performing compression coding to the modified video data to obtain a coded stream; and
   a transmission submodule, for transmitting the coded stream to the user terminal through the video channel.

In the customer service system, the modification submodule may specifically be used for replacing an image of a video frame of the video data to be transmitted with the picture to be transmitted to obtain the modified video data.

In the customer service system, the modification submodule may specifically be used for performing transparency fusion by using either an image of a video frame of the video data to be transmitted or the picture to be transmitted as background and using the other one as foreground to obtain the modified video data.

In the customer service system, wherein the modification submodule may specifically be used for using either an image of a video frame of the video data to be transmitted or the picture to be transmitted as background and overlaying the other one into a predefined position of the background in a way of window to obtain the modified video data.

In order to implement the above purpose, an embodiment of the disclosure also provides a method for implementing customer service, which is used in a customer service system, and it comprises:
the customer service system selects a picture to be transmitted from pre-saved pictures;
the customer service system uses the picture to be transmitted to modify collected video data to be transmitted to obtain modified video data of which video frames at least include the picture to be transmitted;
the customer service system performs compression coding to the modified video data to obtain a coded stream; and
the customer service system transmits the coded stream to a user terminal through a video channel.

In the customer service implementation method, the customer service system may obtain the modified video data through the following ways:
the customer service system replaces an image of a video frame of the video data to be transmitted with the picture to be transmitted to obtain the modified video data; or
the customer service system performs transparency fusion by using either an image of a video frame of the video data to be transmitted or the picture to be transmitted as background and using the other one as foreground to obtain the modified video data; or
the customer service system uses either an image of a video frame of the video data to be transmitted or the picture to be transmitted as background and overlays the other one into a predefined position of the background in a way of window to obtain the modified video data.

The embodiments of the disclosure have the following advantages:
In the specific embodiments of the disclosure, under the case that the agent module has established a video channel with the user terminal, directly by means of modifying original video data, a picture to be transmitted can be integrated in the video data for transmission, as it is unnecessary to reestablish a video channel by the media server to transmit the picture to be transmitted, therefore the response rate is improved. Besides, the video data can be processed directly by the agent module thereby greatly reducing the interaction between the modules in the customer service system, reducing the implementation complexity, and saving network resources and time.

### BRIEF DESCRIPTION OF THE DRAWINGS

Fig. 1 shows a structure diagram of an existing customer service system;
Fig. 2 shows a structure diagram of a customer service system comprising agent modules according to an embodiment of the disclosure; and
Fig. 3 shows a flow diagram of a method according to an embodiment of the disclosure.

### DETAILED DESCRIPTION

In an agent module, a customer service system and a method for implementing customer service according to embodiments of the disclosure, when the agent module carries out manual video service through an established video channel between the agent module and a user terminal, after a picture to be pushed is added to an original video frame, the modified video frame is transmitted to the user terminal through the established video channel so as to implement the push of the picture.

As shown in Fig. 2, a customer service system according to an embodiment of the disclosure comprises:
a call access module;
at least one agent module;
a CTI module, for selecting one agent module from at least one agent module and establishing a video channel between the selected agent module and a user terminal, when a user applies for manual video service; and
a media server, for providing automatic customer service.

Wherein the agent module comprises:
a collection submodule, for collecting video data;
a selection submodule, for selecting a picture to be transmitted from pre-saved pictures;
a modification submodule, for modifying the collected video data to be transmitted by using the picture to be transmitted to obtain modified video data, wherein video frames of the modified video data at least include the picture to be transmitted;
a coding submodule, for performing compression coding to the modified video data to obtain a coded stream; and
a transmission submodule, for transmitting the coded stream to the user terminal through the video channel.

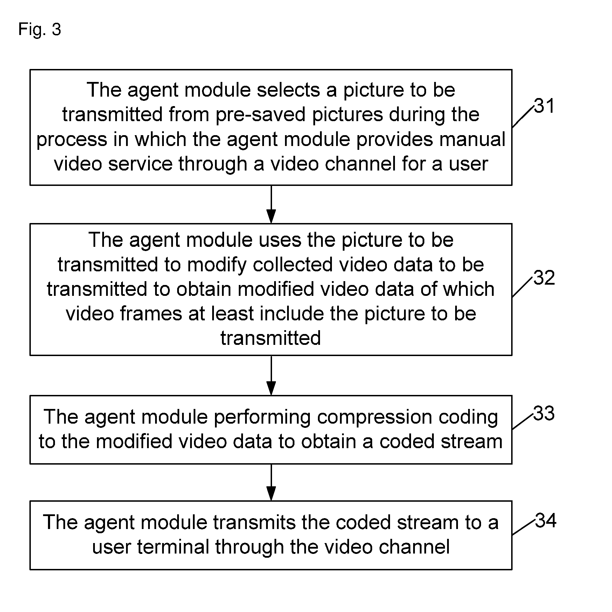

A method for implementing customer service according to an embodiment of the disclosure, used in a customer service system comprising at least one agent module, as shown in Fig. 3, comprises:
Step 31: the agent module selects a picture to be transmitted from pre-saved pictures, during providing manual video service for a user by the agent module through a video channel.
Step 32: the agent module uses the picture to be transmitted to modify collected video data to be transmitted to obtain modified video data, wherein video frames of the modified video data at least include the picture to be transmitted.
Step 33: the agent module performs compression coding to the modified video data to obtain a coded stream.
Step 34: the agent module transmits the coded stream to the user terminal through the video channel.

Specific embodiments of the disclosure will be described in details below.

In a specific embodiment of the disclosure, the user terminal can be a mobile communication terminal such as a Time Division-Synchronous Code Division Multiple Access (TD-SCDMA) mobile communication terminal, a Wideband Code Division Multiple Access (WCDMA) mobile communication terminal and a CDMA2000 mobile communication terminal, and also can be a fixed communication terminal, as long as it can provide video call function.

For different types of terminals, both communication technologies and compression coding technologies adopted during data transmission are different, but belong to the scope of the prior art, which will not be described in details in the specific embodiment of the disclosure.

Generally, after the user dials a specific number through the user terminal, the media server will provide automatic service for the user; during the automatic service, the user can enter manual video service flow by inputting designated codes according to video or audio prompt; at this time, the CTI module needs to select one agent module from at least one agent module according to a certain strategy and establish a video channel between the selected agent module and the user terminal, so that an operator can provide service to the user through the agent module.

During the service, it is supposed that the user needs to know information relating to products, such as, pictures of cell phones, appearance of notebook computers, a price list of products and accessory information of computer hosts and the like, the information is stored in form of image files. In the specific embodiment of the disclosure, the selected agent module selects a picture to be transmitted, which can be determined according to various conditions, such as user requests, input of customer service staff or actual business demands.

After the picture to be transmitted is determined, the selected agent module uses the picture to be transmitted to modify the video data to be transmitted to obtain the modified video data, wherein video frames of the modified video data at least include the picture to be transmitted; therefore, after the modified video data is coded to the coded stream and transmitted to the user terminal, the picture to be transmitted can be seen once the user terminal decodes the data and plays the decoded data.

In the specific embodiment of the disclosure, the process of using the picture to be transmitted to modify the video data to be transmitted to obtain the video data, wherein video frames of the modified video data at least include the picture to be transmitted, can be implemented by various modes which will be described in details below, respectively:
Mode one: replacement is adopted, namely, the modification submodule replaces the image of the video frame of the video data to be transmitted with the picture to be transmitted to obtain the modified video data.
   After the modified video data is coded and transmitted to the user terminal, the picture can be displayed at the user terminal; however, each frame has the same picture.
Mode two: a mode of adjusting transparency of images is adopted, namely, the modification submodule implements the function of image fusion, wherein the modification submodule uses the image of the video frame of the video data to be transmitted as background and the picture to be transmitted as foreground for transparency fusion to obtain the modified video data.
   Of course, it is also possible that the picture to be transmitted can be used as background and the image of the video frame of the video data to be transmitted can be used as foreground for transparency fusion to obtain the modified video data.
   As the picture to be transmitted which is used as foreground has certain transparency, the user can see the original video image and the picture to be transmitted at the same time when the user decodes and plays them.
Mode three: a mode of adjusting sizes of images is adopted, namely, the modification submodule implements the function of image fusion, wherein the image of the video frame of the video data to be transmitted is used as background and the picture to be transmitted is overlaid into a predefined position of the background in a way of window to obtain the modified video data.
   Of course, it is also possible that the picture to be transmitted is used as background and the image of the video frame of the video data to be transmitted is overlaid into a predefined position of the background to obtain the modified video frame.
   It should be understood that the window can be put at a corner of the background, so that the window can shade the important part of the video image which is used as background as less as possible.

The embodiment of the disclosure has the following advantages:
the customer service system according to the embodiment of the disclosure can provide pictures to the user during custom service, which increases the user perception and satisfaction and brings more benefits for service operators.

Of course, in the specific embodiment of the disclosure, the pre-saved pictures can be stored in the agent module, and also be stored in a shared server.

When the pre-saved pictures are stored in the shared server, the selection submodule needs to download the pictures and put the pictures in a public data area; the modification submodule edits or replaces the obtained original video data and the bitmap information of the public data area each time to obtain the modified video data.

Of course, in the specific embodiment of the disclosure, during the push of the picture, the picture to be transmitted can be replaced at any time according to user requests or business demands, which will be described in the following example below.

It is supposed that the service needs to show five pictures to the user, then according to business demands, during the time period from T1 to T1+5, the agent module acquires the first picture, replaces each frame of the video data collected within the time period from T1 to T1+5 with the first picture, and then transmits the replaced video data;
during the time period from T1+5 to T1+10, the agent module acquires the second picture, replaces each frame of the video data collected within the time period from T1+5 to T1 +10 with the second picture, and then transmits the replaced video data;
......
during the time period from T1 +20 to T1+25, the agent module acquires the fifth picture, replaces each frame of the video data collected within the time period from T1+20 to T1+25 with the fifth picture, and then transmits the replaced video data.

Of course, in the specific embodiment of the disclosure, during the push of pictures, the push of pictures can be stopped at any time according to user requests or business demands, the flow when the push of pictures is stopped is completely the same as the prior art, it will not be described in details herein.

In the specific embodiment of the disclosure, under the case that the agent module has established a video channel to the user terminal, directly by modifying original video data, the picture to be transmitted is integrated into the video data for transmission, as it is unnecessary to reestablish a video channel by the media server to transmit the picture to be transmitted, the response rate is improved. Besides, direct processing video data in the agent module greatly reduces the interaction between the modules in the customer service system, reduces the implementation complexity, and also saves the network resources and the time.

Above contents are only referred embodiments of the disclosure. It should be noted that for those skilled in the art, the disclosure could have various alternations and elaborations within the principle of the disclosure, and these alternations and elaborations should be contained within the protection scope of the disclosure.

## Claims

1. An agent module, which is used in a customer service system and used for providing manual video service for a user through a video channel between the agent module and a user terminal, comprising:
a collection submodule, for collecting video data;
a selection submodule, for selecting a picture to be transmitted from pre-saved pictures;
a modification submodule, for using the picture to be transmitted to modify the collected video data to be transmitted to obtain modified video data of which video frames at least include the picture to be transmitted;
a coding submodule, for performing compression coding to the modified video data to obtain a coded stream; and
a transmission submodule, for transmitting the coded stream to the user terminal through the video channel.

2. The agent module according to claim 1, wherein the modification submodule is specifically used for replacing an image of a video frame of the video data to be transmitted with the picture to be transmitted to obtain the modified video data.

3. The agent module according to claim 1, wherein the modification submodule is specifically used for performing transparency fusion by using either an image of a video frame of the video data to be transmitted or the picture to be transmitted as background and using the other one as foreground to obtain the modified video data.

4. The agent module according to claim 1, wherein the modification submodule is specifically used for using either an image of a video frame of the video data to be transmitted or the picture to be transmitted as background and overlaying the other one into a predefined position of the background in a way of window to obtain the modified video data.

5. A customer service system, comprising:
a call access module;
at least one agent module;
a Computer-Telephony Integration (CTI) module, for establishing a video channel between the agent module and a user terminal when a user applies for manual video service;
wherein the agent module comprises:
a collection submodule, for collecting video data;
a selection submodule, for selecting a picture to be transmitted from pre-saved pictures;
a modification submodule, for using the picture to be transmitted to modify the collected video data to be transmitted to obtain modified video data of which video frames at least include the picture to be transmitted;
a coding submodule, for performing compression coding to the modified video data to obtain a coded stream; and
a transmission submodule, for transmitting the coded stream to the user terminal through the video channel.

6. The customer service system according to claim 5, wherein the modification submodule is specifically used for replacing an image of a video frame of the video data to be transmitted with the picture to be transmitted to obtain the modified video data.

7. The customer service system according to claim 5, wherein the modification submodule is specifically used for performing transparency fusion by using either an image of a video frame of the video data to be transmitted or the picture to be transmitted as background and using the other one as foreground to obtain the modified video data.

8. The customer service system according to claim 5, wherein the modification submodule is specifically used for using either an image of a video frame of the video data to be transmitted or the picture to be transmitted as background and overlaying the other one into a predefined position of the background in a way of window to obtain the modified video data.

9. A method for implementing customer service, which is used in a customer service system, comprising:
selecting a picture to be transmitted from pre-saved pictures by the customer service system;
using the picture to be transmitted to modify collected video data to be transmitted by the customer service system to obtain modified video data of which video frames at least include the picture to be transmitted;
performing compression coding to the modified video data by the customer service system to obtain a coded stream; and
transmitting the coded stream to a user terminal by the customer service system through a video channel.

10. The method for implementing customer service according to claim 9, wherein the step of obtaining the modified video data by the customer service system through the following modes:
replacing an image of a video frame of the video data to be transmitted with the picture to be transmitted by the customer service system to obtain the modified video data; or
performing transparency fusion by using either an image of a video frame of the video data to be transmitted or the picture to be transmitted as background and using the other one as foreground by the customer service system to obtain the modified video data; or
using either an image of a video frame of the video data to be transmitted or the picture to be transmitted as background and overlaying the other one into a predefined position of the background in a way of window by the customer service system to obtain the modified video data.
